# EUROPEAN PATENT SPECIFICATION

(11) **EP 0 805 094 B1**
(45) Date of publication and mention of the grant of the patent: **24.10.2001**
(21) Application number: 97201057.3
(22) Date of filing: 09.04.1997
(51) Int. Cl.: B62D 3/12

(54) **Rack and pinion steering gear**
Zahnstangenlenkung
Direction à crémaillère

(30) Priority: 03.05.1996 GB 9609386
(43) Date of publication of application: 05.11.1997
(73) Proprietor: Delphi France Automotive Systems, 92257 La Garenne-Colombes (FR)
(72) Inventor: Alla, Tayeb, 91000 Evry (FR); Rhezrani, Mohammed, 75019 Paris (FR)
(74) Representative: Denton, Michael John

(56) References cited:
- PATENT ABSTRACTS OF JAPAN vol. 006, no. 193 (M-160), 2 October 1982 -& JP 57 099466 A (YAMADA SEISAKUSHO:KK), 21 June 1982,

## Description

The present invention relates to a rack and pinion steering gear for a motor vehicle.

Known rack and pinion steering gears comprise a rack gear which is biased into, and retained in, engagement with a pinion gear. The biasing and retaining means typically comprises a piston which slides within a bore, a coil spring acting on the piston to bias the piston into engagement with the rack gear, and an end cap which closes the open end of the bore, the coil spring being positioned between the end cap and the piston.

JP-A-57 099466 discloses a rack and pinion steering gear in accordance with the preamble of Claim 1. It is an object of the present invention to provide an improved rack and pinion steering gear.

A rack and pinion steering gear in accordance with the present invention is characterised over JP-A-57 099466 by the features specified in the characterising portion of Claim 1.

With this arrangement, the leaf spring acts to bias and retain the rack gear in engagement with the pinion gear. The present invention provides a biasing and retaining arrangement which has a reduced number of parts, is easier to assemble, is cheaper, and is lighter, than previously known arrangements.

The present invention will now be described, by way of example, with reference to the accompanying drawings, in which:-
Figure 1 is a cross-sectional view of a first embodiment of rack and pinion steering gear in accordance with the present invention;
Figure 2 is a perspective view of the leaf spring of the rack and pinion steering gear shown in Figure 1;
Figure 3 is a cross-sectional view of a second embodiment of rack and pinion steering gear in accordance with the present invention; and
Figure 4 is a perspective view of the leaf spring of the rack and pinion steering gear shown in Figure 3.

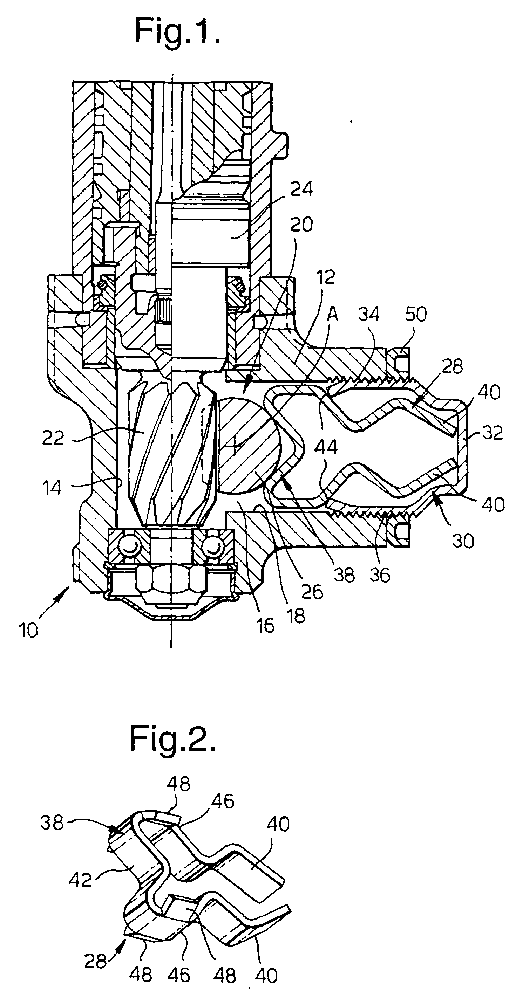

Referring to Figures 1 and 2 of the drawings, the first embodiment of rack and pinion steering gear 10 for a motor vehicle includes a housing 12. The housing 12 has first, second and third bores 14,16,18, respectively, which open at a common intersection 20. The bores 14-18 preferably extend in axial directions substantially perpendicular to one another. A pinion gear 22 is rotatably mounted in the first bore 14 and is connected by a shaft 24 to a steering wheel (not shown). A rack gear 26 is mounted in the second bore 16 and is capable of translational movement along the axis A of the second bore. The rack gear 26 is connected to the wheels (not shown) of the motor vehicle. The rack gear 26 engages the pinion gear 22 at the common intersection 20 of the bores 14-18. Rotation of the pinion gear 22 causes translational movement of the rack gear 26 to steer the motor vehicle. The arrangement thus far described, and its operation, is well known to those skilled in the art, and will not be further described in detail.

The rack gear 26 is biased into, and retained in, engagement by the pinion gear 22 by a leaf spring 28 and an end cap 30. The end cap 30 is substantially cup-shaped and has a base portion 32 with a surrounding wall 34. The wall 34 has an external surface which is threaded. The third bore 18 in the housing 12 has an internal surface adjacent its open end 36 which has a correspondingly threaded surface. The end cap 30 is screw-threaded into the open end 36 of the third bore 18. The leaf spring 28 is bent from sheet metal (such as steel) and has a substantially M-shaped portion 38 and a pair of bent leg portions 40 which are substantially Z-shaped. The V-shaped portion 42 of the M-shaped portion 38 engages the rack gear 26. The inner edge 44 of the wall 34 of the end cap 30 engages the ends 46 of the M-shaped portion 38 of the leaf spring 28. The leg portions 40 extend away from the ends 46 of the M-shaped portion 38 and engage the base portion 32 of the end cap 30. The leaf spring 28 also has a pair of guide portions 48 adjacent each end 46 of the M-shaped portion 38. The leaf spring 28 is positioned inside the third bore 18 of the housing 12 and the end cap 30 is screwed into position. The inner edge 44 of the end cap 30 engages the ends 46 of the M-shaped portion 38 of the leaf spring 28 and the base portion 32 of the end cap engages the leg portions 40 of the leaf spring to push the V-shaped portion 42 of the leaf spring into engagement with the rack gear 26. This arrangement biases the rack gear 26 into engagement with the pinion gear 22 and retains the engagement between the rack gear and the pinion gear. The V-shaped portion 42 of the leaf spring 28 assures the location of the rack gear 26. The bent leg portions 40 of the leaf spring 28 compensate for any play between the rack gear 26 and the pinion gear 22. Each pair of guide portions 48 provide an arcuate (curved) outer surface to help position the leaf spring 28 within the third bore 18. Once the leaf spring 28 and end cap 30 are in position, and locking nut 50 is threaded onto the end cap to retain the end cap in position.

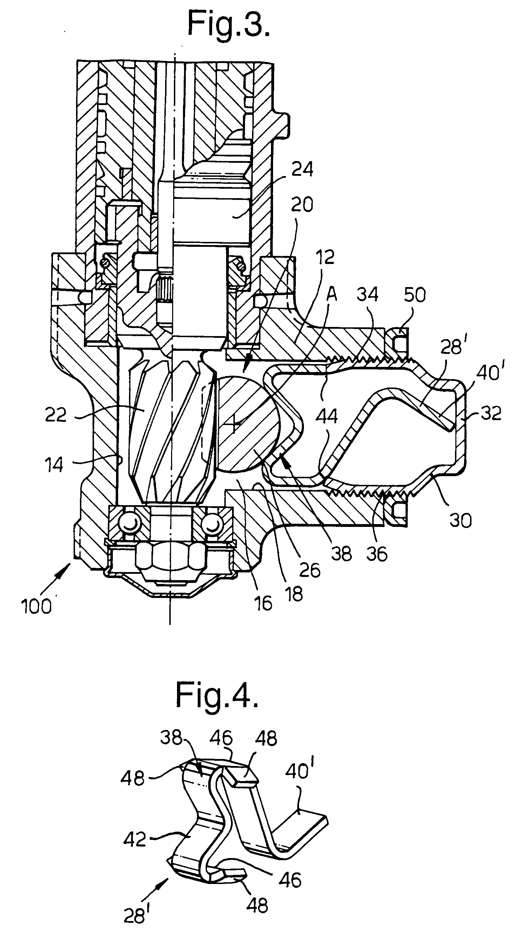

The second embodiment of rack and pinion steering gear 100 shown in Figures 3 and 4 is substantially the same as the first embodiment, and like parts have been given the same reference number. In this arrangement, the leaf spring 28' only has a single bent leg portion 40' which is substantially L-shaped.

As well as the advantages specified above with respect to previously known arrangements, the rack and pinion steering gear of the present invention has the additional advantage that the same leaf springs 28,28' can be used with rack gears 26 of different diameters. Still further, the present invention can be put into practise without any changes to presently available housings 12.

Although the embodiments described above make use of end caps which are substantially cup-shaped, it will be appreciated that other shapes of end cap may be used. Also, leaf springs having portions of shapes other than M-shaped portions may be used which fall in the scope of claim 1.

## Claims

1. A rack and pinion steering gear (10) comprising a housing (12) having a first bore (14), a second bore (16) and a third bore (18), the first, second and third bores having a common intersection (20) with the third bore having an open end (20); a pinion gear (22) rotatably mounted in the first bore; a rack gear (26) axially movable in the second bore and engaging the pinion gear at the common intersection of the bores; an end cap (30) threadably mounted at the open end of the third bore; and a leaf spring (28) positioned in the third bore between the end cap and the rack gear, the end cap engaging the leaf spring to push the leaf spring into engagement with the rack gear; **characterised in that** the leaf spring has at least one bent leg portion (40) which engages the end cap.

2. A rack and pinion steering gear as claimed in Claim 1, wherein the leaf spring (28) has a V-shaped portion (38) which engages the rack gear (26).

3. A rack and pinion steering gear as claimed in Claim 1 or Claim 2, wherein the leaf spring (28) has an M-shaped portion, and wherein the end cap (30) engages the ends (46) of the M-shaped portion.

4. A rack and pinion steering gear as claimed in any one of Claims 1 to 3, wherein the end cap (30) is substantially cup-shaped and has an externally threaded surface (36) such that the end cap is threadably mounted in the open end (20) of the third bore (18), and wherein the leaf spring (28) is engaged by the inner edge (44) of the end cap.

5. A rack and pinion steering gear as claimed in Claim 4, wherein the at least one bent leg portion (40) of the leaf spring (28) engages a base portion (32) of the end cap (30).

## Patentansprüche

1. Zahnstangenlenkgetriebe (10) mit einem Gehäuse (12), das eine erste Bohrung (14), eine zweite Bohrung (16) und eine dritte Bohrung (18) aufweist, wobei die ersten, zweiten und dritten Bohrungen eine gemeinsame Überschneidung (20) aufweisen, wobei die dritte Bohrung ein offenes Ende (20) aufweist; einem Zahnrad (22), das in der ersten Bohrung drehbar befestigt ist; einer Zahnstange (26), die in der zweiten Bohrung axial bewegbar ist und mit dem Zahnrad an der gemeinsamen Überschneidung der Bohrungen in Eingriff steht; einer Endkappe (30), die über Gewinde an dem offenen Ende der dritten Bohrung befestigt ist; und einer Blattfeder (28), die in der dritten Bohrung zwischen der Endkappe und der Zahnstange positioniert ist, wobei die Endkappe mit der Blattfeder in Eingriff steht, um die Blattfeder in Eingriff mit der Zahnstange zu drücken; **dadurch gekennzeichnet, daß** die Blattfeder zumindest einen gebogenen Beinabschnitt (40) aufweist, der mit der Endkappe in Eingriff steht.

2. Zahnstangenlenkgetriebe nach Anspruch 1, wobei die Blattfeder (28) einen V-förmigen Abschnitt (38) aufweist, der mit der Zahnstange (26) in Eingriff steht.

3. Zahnstangenlenkgetriebe nach einem der Ansprüche 1 oder 2, wobei die Blattfeder (28) einen M-förmigen Abschnitt aufweist, und wobei die Endkappe (30) mit den Enden (46) des M-förmigen Abschnittes in Eingriff steht.

4. Zahnstangenlenkgetriebe nach einem der Ansprüche 1 bis 3, wobei die Endkappe (30) im wesentlichen tassenförmig ist und eine Fläche (36) mit Außengewinde aufweist, so daß die Endkappe schraubbar in dem offenen Ende (20) der dritten Bohrung (18) befestigbar ist, und wobei die Blattfeder (28) mit dem inneren Rand (44) der Endkappe in Eingriff steht.

5. Zahnstangenlenkgetriebe nach Anspruch 4, wobei der zumindest eine gebogene Beinabschnitt (40) der Blattfeder (28) mit einem Basisabschnitt (32) der Endkappe (30) in Eingriff steht.

## Revendications

1. Direction à crémaillère et pignon (10) comportant un boîtier (12) ayant un premier alésage (14), un deuxième alésage (16) et un troisième alésage (18), les premier, deuxième et troisième alésages ayant une intersection commune (20), le troisième alésage ayant une extrémité ouverte (20), un pignon (22) monté de manière rotative dans le premier alésage, une crémaillère (26) mobile axialement dans le deuxième alésage, et étant en prise avec le pignon au niveau de l'intersection commune des alésages, un couvercle d'extrémité (30) monté de manière filetée au niveau de l'extrémité ouverte du troisième alésage, et un ressort à lame (28) positionné dans le troisième alésage entre le couvercle d'extrémité et la crémaillère, le couvercle d'extrémité étant en contact avec le ressort à lame pour pousser le ressort à lame en contact avec la crémaillère, **caractérisée en ce que** le ressort à lame a au moins une partie formant patte incurvée (40) qui vient en contact avec le couvercle d'extrémité.

2. Direction à crémaillère et pignon selon la revendication 1, dans laquelle le ressort à lame (28) a une partie en forme de V (38) qui vient en contact avec la crémaillère (26).

3. Direction à crémaillère et pignon selon l'une quelconque des revendications 1 ou 2, dans laquelle le ressort à lame (28) a une partie en forme de M, et dans laquelle le couvercle d'extrémité (30) vient en contact avec les extrémités (46) de la partie en forme de M.

4. Direction à crémaillère et pignon selon l'une quelconque des revendications 1 à 3, dans laquelle le couvercle d'extrémité (30) est sensiblement en forme de coupelle, et a une surface filetée extérieurement (36), de telle sorte que le couvercle d'extrémité est monté de manière filetée dans l'extrémité ouverte (20) du troisième alésage (18), et dans lequel le ressort à lame (28) est mis en contact avec le bord intérieur (44) du couvercle d'extrémité.

5. Direction à crémaillère et pignon selon la revendication 4, dans laquelle la au moins une partie formant patte incurvée (40) du ressort à lame (28) vient en contact avec une partie de base (32) du couvercle d'extrémité (30).
